# EUROPEAN PATENT APPLICATION

(11) **EP 4 484 777 A1**
(43) Date of publication of application: **01.01.2025**
(21) Application number: 23849000.7
(22) Date of filing: 23.05.2023
(51) Int. Cl.: F16C 17/02

(54) **AIR BEARING, ROTOR ASSEMBLY, COMPRESSOR, AND HEATING AND VENTILATION DEVICE**

(30) Priority: 30.07.2022 CN 202210912666
(71) Applicant: GD Midea Heating & Ventilating Equipment Co., Ltd., Foshan, Guangdong 528311 (CN); Chongqing Midea General Refrigeration Equipment Co., Ltd., Chongqing 401336 (CN); Midea Group Co., Ltd., Foshan, Guangdong 528311 (CN)
(72) Inventor: LIU, Shuqing, Foshan, Guangdong 528311 (CN); LIU, Penghui, Foshan, Guangdong 528311 (CN); YUE, Bao, Foshan, Guangdong 528311 (CN); HE, Weiheng, Foshan, Guangdong 528311 (CN); LIU, Sheng, Foshan, Guangdong 528311 (CN); CHEN, Xulang, Foshan, Guangdong 528311 (CN)
(74) Representative: RGTH
(86) International application number: PCT/CN2023/095794
(87) International publication number: WO 2024/027290

(57) **Abstract**

Provided are an air bearing, a rotor assembly, a compressor, and a heating and ventilation device. The air bearing includes a mounting base (121), a bump foil, and a top foil (123) that are stacked in sequence. The bump foil includes a first bump foil (122a) and a second bump foil (122b). The first bump foil (122a) includes a first corrugated segment (1221a). The second bump foil (122b) includes a second corrugated segment (1221b). The second corrugated segment (1221b) and the first corrugated segment (1221a) are stacked. A gap is formed between a peak of the second corrugated segment (1221b) and the first corrugated segment (1221a) in a stacking direction. The second corrugated segment (1221b) is closer to the top foil (123) than the first corrugated segment (1221a) in the stacking direction.

## Description

### CROSS-REFERENCE TO RELATED APPLICATION

The present application claims priority to Chinese patent application No. 202210912666.9, titled "AIR BEARING, ROTOR ASSEMBLY, COMPRESSOR, AND HEATING AND VENTILATION DEVICE" and filed with China National Intellectual Property Administration on July 30, 2022, the entire contents of which are incorporated herein by reference.

### FIELD

The present disclosure relates to the technical field of bearings, and more particularly, to an air bearing, a rotor assembly comprising the air bearing, a compressor including the air bearing, and a heating and ventilation device comprising the air bearing.

### BACKGROUND

An air bearing is a kind of dynamic pressure bearing, which uses a gas in a surrounding environment as a lubricant and adopts a foil as an elastic support element. In foreign countries, the air bearing has been commercialized and widely applied in an air refrigeration system since the 1970s. The air bearing in the related art has a limited bearing capacity, is prone to a deformation, and has a low applicable load.

In the related art, some double-layer bump foil structures are provided. In some schemes, corrugated segments of the double-layer bump foil structures are in tangential contact or abut with each other. In other schemes, a structure composed of a bump foil, a top foil, another bump foil, and another top foil that are stacked together is provided, in which the bump foil and the top foil that are adjacent to each other abut with each other. Since loads of a compressor and other devices change during operation, adopting the schemes in the related art is unlikely to meet operation requirements under different loads.

### SUMMARY

An objective of the present disclosure is to provide an air bearing. A gap is formed between corrugated segments of a bump foil, which can improve a bearing capacity of the air bearing while meeting use requirements under a low load.

Another objective of the present disclosure is to provide a rotor assembly comprising the above air bearing.

Yet another objective of the present disclosure is to provide a compressor comprising the above air bearing or the above rotor assembly.

Still yet another objective of the present disclosure is to provide a heating and ventilation device comprising the above air bearing, the above rotor assembly, or the above compressor.

An air bearing according to an embodiment of the present disclosure comprises a mounting base, a bump foil, and a top foil that are stacked in sequence. The bump foil comprises a first bump foil and a second bump foil. The first bump foil comprises a first corrugated segment. The second bump foil comprises a second corrugated segment. The second corrugated segment and the first corrugated segment are stacked. A gap is formed between a peak of the second corrugated segment and the first corrugated segment in a stacking direction. The second corrugated segment is closer to the top foil than the first corrugated segment in the stacking direction.

With the air bearing according to the embodiments of the present disclosure, the first corrugated segment and the second corrugated segment are stacked together, and a gap is formed between the first corrugated segment and the second corrugated segment. Therefore, one of the first corrugated segment and the second corrugated segment undergoes a deformation first when subjected to a pressure transmitted by the top foil. When an amount of the deformation is greater than a value of the gap, the first corrugated segment and the second corrugated segment provide support together. In this way, a more stable support force with gradual increase is provided for the top foil, which is more conducive to maintaining stability of the air bearing and improving the bearing capacity of the air bearing compared with the related art.

In addition, the air bearing according to the above embodiments of the present disclosure may also have the following additional technical features.

Alternatively, at least two first corrugated segments of the first bump foil have different protrusion heights.

Alternatively, at least two second corrugated segments of the second bump foil have different protrusion heights.

Alternatively, the at least two first corrugated segments are alternately arranged in a circumferential direction of the air bearing.

Alternatively, the at least two second corrugated segments are alternately arranged in the circumferential direction of the air bearing.

Alternatively, the gap formed between the peak of the second corrugated segment and the first corrugated segment in the stacking direction has a size greater than or equal to 0.03 mm and less than or equal to 0.12 mm.

Alternatively, a plurality of first corrugated segments of the first bump foil and one second corrugated segment of the second bump foil are stacked.

Alternatively, one first corrugated segment of the first bump foil and a plurality of second corrugated segments of the second bump foil are stacked;

Alternatively, the plurality of first corrugated segments of the first bump foil and the plurality of second corrugated segments of the second bump foil are stacked.

Alternatively, the first bump foil and a part of the second bump foil are stacked.

Alternatively, the second bump foil and a part of the first bump foil are stacked.

Alternatively, the air bearing comprises a plurality of first bump foils arranged in a circumferential direction of the air bearing.

Alternatively, the air bearing comprises a plurality of second bump foils arranged in the circumferential direction of the air bearing.

Alternatively, the first bump foil further comprises a first connection segment alternately connected to the first corrugated segment in a circumferential direction of the air bearing.

Alternatively, the second bump foil further comprises a second connection segment alternately connected to the second corrugated segment in the circumferential direction of the air bearing.

Alternatively, the first corrugated segment and the second corrugated segment are stacked to form a gap or contact with each other in a circumferential direction of the air bearing.

Alternatively, the first bump foil comprises a plurality of segments arranged at intervals in a transverse direction; or the second bump foil comprises a plurality of segments arranged at intervals in the transverse direction, where the transverse direction is perpendicular to the stacking direction and a circumferential direction of the air bearing.

Alternatively, at least two first corrugated segments of the first bump foil have different thicknesses.

Alternatively, at least two second corrugated segments of the second bump foil have different thicknesses.

Alternatively, the thickness of the first corrugated segment is different from the thickness of the second corrugated segment.

Alternatively, each of the first corrugated segment of the first bump foil and the second corrugated segment of the second bump foil protrudes towards the mounting base.

Alternatively, each of the first corrugated segment of the first bump foil and the second corrugated segment of the second bump foil protrudes towards the top foil.

Alternatively, the top foil comprises a plurality of layers stacked on each other.

Alternatively, the top foil has a first portion and a second portion. The first portion and the second portion have different thicknesses.

Alternatively, the bump foil further comprises at least one third bump foil. The at least one third bump foil is disposed between the first bump foil and the second bump foil. The at least one third bump foil is disposed between the first bump foil and the mounting base. Or the at least one third bump foil is disposed between the second bump foil and the top foil.

Alternatively, the mounting base has positioning grooves.

Alternatively, an end of the first bump foil and an end of the second bump foil are inserted and fixed in one positioning groove of the positioning grooves.

Alternatively, an end of the first bump foil and an end of the second bump foil are respectively inserted and fixed in different positioning grooves of the positioning grooves.

Alternatively, each of the positioning grooves has a positioning opening at an inner side wall of the positioning groove. The mounting base is provided with a positioning pin embedded in the positioning opening. The positioning pin is configured to position the bump foil.

Alternatively, the air bearing is a radial air bearing or an axial air bearing.

A rotor assembly according to an embodiment of the present disclosure comprises a rotor. The rotor assembly further comprises a radial air bearing and/or an axial air bearing. The radial air bearing sleeves on an outer periphery of the rotor. The radial air bearing is the air bearing according to the above claims. The mounting base, the bump foil, and the top foil of the radial air bearing are sequentially stacked on each other from outside to inside in a radial direction of the rotor. The axial air bearing is engaged with the rotor. The axial air bearing is the air bearing according to the above claims. The mounting base, the bump foil, and the top foil of the axial air bearing are sequentially stacked on each other in an axial direction of the rotor.

A compressor according to an embodiment of the present disclosure comprises the above air bearing or the above rotor assembly.

A heating and ventilation device according to an embodiment of the present disclosure comprises the above air bearing, the above rotor assembly, or the above compressor.

The present disclosure provides the air bearing, the rotor assembly, the compressor, and the heating and ventilation device. In comparison, a double-layer bump foil structure in the related art has corrugated segments abutting with each other or in tangential contact. When subjected to a pressure transmitted by a top foil, top parts of individual layers of bump foil of the double-layer bump foil are deformed simultaneously to support the top foil. However, in the solutions of the present disclosure, a gap is formed between a peak of at least one corrugated segment of the first bump foil and a corrugated segment of the second bump foil corresponding to the at least one corrugated segment of the first bump foil. When subjected to a pressure transmitted by the top foil, the second bump foil undergoes a deformation first to support the top foil. When an amount of the deformation is greater than a value of the gap, the first bump foil undergoes a deformation and provides support together with the second bump foil. In this way, a more stable support force with gradual increase is provided for the top foil, which is more conducive to maintaining the stability of the air bearing and improving the bearing capacity of the air bearing compared with the related art.

### BRIEF DESCRIPTION OF THE DRAWINGS

FIG. 1 is a schematic view of an air bearing according to some embodiments of the present disclosure.
FIG. 2 is a schematic partial enlarged view of a local region in FIG. 1.
FIG. 3 is a schematic view of an air bearing according to some embodiments of the present disclosure.
FIG. 4 is a schematic partial enlarged view of a local region in FIG. 3.
FIG. 5 is a schematic view of an air bearing according to some other embodiments of the present disclosure.
FIG. 6 is a schematic partial enlarged view of a local region in FIG. 5.
FIG. 7 is a schematic view of an unfolded first bump foil or an unfolded second bump foil of an air bearing according to some embodiments of the present disclosure.
FIG. 8 is a schematic view of a rotor assembly according to some embodiments of the present disclosure.

### Reference numerals of the accompanying drawings:

rotor assembly 10, rotor 11, air bearing 12, radial air bearing 12b, axial air bearing 12a, mounting base 121, positioning groove 1201, positioning opening 1202, positioning pin 1203, first bump foil 122a, first corrugated segment 1221a, first connection segment 1222a, second bump foil 122b, second corrugated segment 1221b, second connection segment 1222b, top foil 123.

### DETAILED DESCRIPTION OF THE EMBODIMENTS

China is the world's largest producer, consumer, and exporter of refrigeration products, with refrigeration energy consumption accounting for 15% of total energy consumption of the whole society. During a summer peak period, an increase of refrigeration loads such as air conditioning not only puts a heavy burden on a power grid, but also produces a large amount of greenhouse gas emissions. Therefore, pushing forward green and efficient refrigeration has become an important and urgent need for countries to promote energy conservation and emission reduction and cope with climate change.

Under current background of "carbon neutrality and carbon peaking", low-carbon refrigeration apparatuses must be developed. A core component of a refrigeration system is a refrigeration compressor. In conventional refrigeration compressors, a lubricating medium of a sliding bearing is lubricating oil. But the lubricating oil has high viscosity, which produce large friction power consumption at a high rotational speed. In addition, an existence of the lubricating oil affects a heat exchange effect of a heat exchanger for long-term use, causing a decline in performance of the refrigeration system. A magnetic bearing has advantages of low friction loss and satisfactory stability, but the magnetic bearing is costly. Therefore, the advantages of the magnetic bearing are not obvious in small and medium-sized compressors. A dynamic pressure air bearing has advantages of high rotational speed, high efficiency, and low friction loss, and is very suitable for small and medium-sized compressors.

An air bearing of the present disclosure includes a top foil, a bump foil, and a mounting base. The top foil and the mounting base are engaged with two components that are rotatable relative to each other, respectively. When the two components rotate relative to each other, an air suspension effect is generated, reducing a resistance during a rotation. For example, as an example, the mounting base is fixed, and the top foil is engaged with a rotary shaft. When the rotary shaft rotates at a high speed, an airflow enters between the rotary shaft and the top foil. In addition, since the bump foil has a certain elastic support force and a certain elastic deformation ability, a stable engagement between the top foil and the rotary shaft can be maintained. Also, a friction between the rotary shaft and the top foil can be reduced through air suspension, maintaining a stable rotation of the rotary shaft.

The air bearing of the present disclosure includes an axial air bearing and a radial air bearing. The axial air bearing is disposed at an end of the above rotary shaft. The top foil and the mounting base are arranged in an axial direction of the rotary shaft to limit an axial displacement of the rotary shaft. The radial air bearing sleeves on the rotary shaft. The top foil and the mounting base are arranged in a radial direction of the rotary shaft to limit a radial displacement of the rotary shaft.

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limit, the present disclosure.

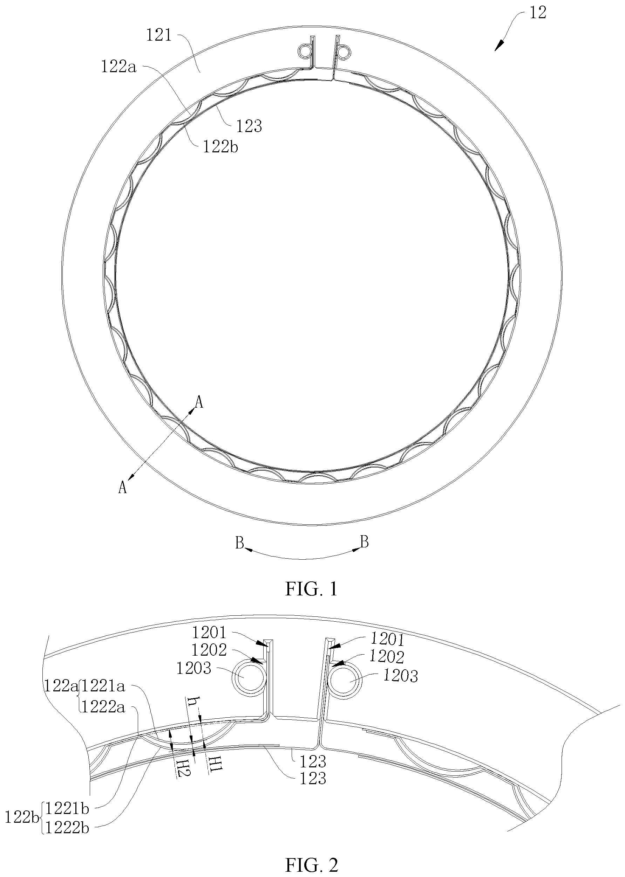

As illustrated in FIG. 1 and FIG. 2, an air bearing 12 according to the embodiments of the present disclosure includes a mounting base 121, a bump foil, and a top foil 123 that are stacked in sequence. The bump foil includes a first bump foil 122a including a first corrugated segment 1221a and a second bump foil 122b including a second corrugated segment 1221b. The second corrugated segment 1221b and the first corrugated segment 1221a are stacked. A gap h is formed between a peak of the second corrugated segment 1221b and the first corrugated segment 1221a in a stacking direction. In addition, the second corrugated segment 1221b is closer to the top foil 123 than the first corrugated segment 1221a in the stacking direction. When the top foil 123 is deformed towards the mounting base 121 during use of the air bearing 12, one of the first corrugated segment 1221a and the second corrugated segment 1221b is triggered to deform first. When a load of the air bearing 12 is large, the gap vanishes. In this way, the first corrugated segment 1221a and the second corrugated segment 1221b can be used to jointly support the top foil 123 to improve a support effect on the top foil 123, improving a structural strength and a bearing capacity of the air bearing 12.

With the air bearing 12 according to the embodiments of the present disclosure, the gap is formed between the peak of the second corrugated segment 1221b and the first corrugated segment 1221a in the stacking direction. When the load of the air bearing 12 varies, different quantities of corrugated segments can be used to provide support for the top foil 123 under different loads. Therefore, a problem of a gas leakage caused by an excessive gap between the top foil 123 and the rotary shaft can be avoided while ensuring that the air bearing 12 has a high bearing capacity, to maintain stability of the air bearing 12, improving the bearing capacity of the air bearing 12.

Compared with the related art, a double-layer bump foil structure in the related art has corrugated segments abutting with each other or in tangential contact. When subjected to a pressure transmitted by the top foil 123, top parts of individual layers of bump foil of the double-layer bump foil are deformed simultaneously to support the top foil 123. While in the present disclosure, by forming the gap in the stacking direction between the peak of the second corrugated segment 1221b and the first corrugated segment 1221a, support provided by the bump foil for the top foil 123 can be adjusted under different loads, which improves the stability of the air bearing 12 under different loads. In this way, a more stable support force with gradual increase is provided for the top foil 123, which is more conducive to maintaining stability of the air bearing 12 and improving the bearing capacity of the air bearing 12 compared with the related art.

It should be noted that, the above description of the first bump foil 122a and the second bump foil 122b refers to an engagement between the first bump foil 122a and the second bump foil 122b when the air bearing 12 is not in use, e.g., when the top foil 123 is engaged with the rotary shaft and the rotary shaft dose not rotate; or when the air bearing 12 is not engaged with the rotary shaft.

In addition, it should also be noted that, the present disclosure describes a first direction A-A, a second direction B-B, and a third direction (as illustrated in a direction perpendicular to a paper surface in FIG. 1). In the present disclosure, the first direction refers to a direction from the mounting base 121 to the top foil 123, the second direction refers to a circumferential direction of the air bearing 12, and the third direction refers to a direction perpendicular to the first direction and the second direction. Taking a radial air bearing 12b as an example, the first direction is a radial direction of the air bearing 12, the second direction is a circumferential direction of the air bearing 12, and the third direction is an axial direction of the air bearing 12. Taking an axial air bearing 12a as an example, the first direction is an axial direction of the air bearing 12, the second direction is a circumferential direction of the air bearing 12, and the third direction is a radial direction of the air bearing 12.

In addition, in the present disclosure, as an example, the top foil 123 is supported by the first corrugated segment 1221a and the second corrugated segment 1221b. The second corrugated segment 1221b is closer to the top foil 123 than the first corrugated segment 1221a. The gap is formed between the peak of the second corrugated segment 1221b and the first corrugated segment 1221a. In this case, when the top foil 123 is deformed towards the mounting base 121, the second corrugated segment 1221b is first compressed and deformed. After the gap is eliminated, the second corrugated segment 1221b abuts with the first corrugated segment 1221a. Therefore, the top foil 123 is supported by the first corrugated segment 1221a and the second corrugated segment 1221b together. In addition, in the present disclosure, the first corrugated segment 1221a and the second corrugated segment 1221b are configured to support the mounting base 121. Also, the second corrugated segment 1221b is closer to the top foil 123 than the first corrugated segment 1221a. In this case, when the top foil 123 is deformed towards the mounting base 121, the first corrugated segment 1221a is compressed and deformed first. After the gap vanishes, the peak of the second corrugated segment 1221b abuts with the first corrugated segment 1221a. Therefore, the top foil 123 is supported by the first corrugated segment 1221a and the second corrugated segment 1221b together.

In some embodiments of the present disclosure, at least two first corrugated segments 1221a of the first bump foil 122a have different protrusion heights. In this way, a form of a localized increase in a support height of the top foil 123 can be realized to meet different load requirements, which facilitates satisfying a bearing effect on the rotary shaft even when loads at different parts of the air bearing 12 in the circumferential direction of the air bearing 12 are not completely consistent, improving rotational stability of the rotary shaft.

Further, at least two first corrugated segments 1221a are alternately arranged in the circumferential direction of the air bearing 12. That is, in the circumferential direction of the air bearing 12, among a plurality of adjacent first corrugated segments 1221a, heights of the first corrugated segments 1221a located at two ends of the plurality of adjacent first corrugated segments 1221a are higher or lower than heights of the first corrugated segments 1221a located in a middle portion of the plurality of adjacent first corrugated segments 1221a. Therefore, stability of the top foil 123 can be maintained, allowing the stability to be achieved when the top foil 123 has different displacements to improve stability of an air film between the top foil 123 and the rotary shaft. When no load is applied, the top foil 123 is supported by a higher part of the corrugated segments. When the top foil 123 moves a certain displacement towards the mounting base 121, the top foil 123 is supported by more first corrugated segments 1221a. When the top foil 123 continues to move a certain displacement towards the mounting base 121, the top foil 123 can be supported by a plurality of bump foils.

Similarly, the second bump foil 122b is configured such that the at least two second corrugated segments 1221b have different protrusion heights. Further, the at least two second corrugated segments 1221b are alternately arranged in the circumferential direction of the air bearing 12.

When the first bump foil 122a and the second bump foil 122b each have corrugated segments with different heights, the first corrugated segments 1221a having higher protrusion heights (than other first corrugated segments 1221a) and the second corrugated segments 1221b having higher protrusion heights (than other second corrugated segments 1221b) are stacked, and the first corrugated segments 1221a having lower protrusion heights (than other first corrugated segments 1221a) and the second corrugated segments 1221b having lower protrusion heights (than other second corrugated segments 1221b) are stacked. Alternatively, the first corrugated segments 1221a having the lower protrusion heights (than the other first corrugated segments 1221a) and the second corrugated segments 1221b having the higher protrusion heights (than the other second corrugated segments 1221b) are stacked, and the first corrugated segments 1221a having the higher protrusion heights (than the other first corrugated segments 1221a) and the second corrugated segments 1221b having the lower protrusion heights (than the other second corrugated segments 1221b) are stacked. Of course, other arrangements may also be adopted to meet different operation environment requirements.

In the present disclosure, the gap is be formed between the first corrugated segment 1221a of the first bump foil 122a and the peak of the second corrugated segment 1221b of the second bump foil 122b in different ways. For example, the first corrugated segment 1221a and the second corrugated segment 1221b are configured to have different heights, or the like.

As illustrated in FIG. 2, in some embodiments of the present disclosure, the first corrugated segment 1221a has the protrusion height H1 smaller than the protrusion height H2 of the second corrugated segment 1221b to form the gap. By varying the heights of the first corrugated segment 1221a and the second corrugated segment 1221b, the gap in the stacking direction can be conveniently formed between the peak of the second corrugated segment 1221b and the first corrugated segment 1221a. Further, the first bump foil 122a and the second bump foil 122b have simple structures, which facilitates production, and improves a structural strength and stability of the first bump foil 122a and the second bump foil 122b.

In addition, according to the present disclosure, first connection segments 1222a and a plurality of first corrugated segments 1221a are arranged alternately. Second connection segments 1222b and a plurality of second corrugated segments 1221b are arranged alternately. The first connection segment 1222a and the second connection segment 1222b are stacked. The gap is formed between the peak of the second corrugated segment 1221b and the first corrugated segment 1221a by varying thicknesses of the first connection segment 1222a and the second connection segment 1222b. Of course, the above gap may be formed in other ways in the present disclosure. The above description is to facilitate understanding of the present disclosure, and is not intended to limit the scope of protection of the present disclosure.

In addition, it should also be noted that, the protrusion height in the present disclosure refers to a height of a corresponding structure relative to a connection line between two ends of the corresponding structure in a cross section of the corresponding structure. The connection line extends in the circumferential direction of the air bearing 12. For example, for the radial air bearing 12b, the connection line is an arc line centered on an axis of the air bearing 12. For the axial air bearing 12a, the connection line is perpendicular to an axis of the air bearing 12. Further, the connection line between the two ends may be a straight line connecting the two ends.

For example, the protrusion height of the first corrugated segment 1221a refers to a height of a peak of a cross section of the first corrugated segment 1221a relative to a connection line between two ends of the first corrugated segment 1221a.

In some embodiments of the present disclosure, the gap formed between the peak of the second corrugated segment 1221b and the first corrugated segment 1221a in the stacking direction has a size greater than or equal to 0.03 mm and less than or equal to 0.12 mm. The size of the gap may be 0.03 mm, 0.05 mm, 0.07 mm, 0.10 mm, 0.12 mm, etc. Therefore, a problem of an insufficient support strength of the second corrugated segment 1221b due to an excessive gap size can be avoided. Also, after the second corrugated segment 1221b moves towards the mounting base 121 to reach a suitable position, the second corrugated segment 1221b can be in contact with the first corrugated segment 1221a to enhance the support effect on the top foil 123, effectively improving the stability and the bearing capacity of the air bearing 12.

Of course, the size of the above gap may be set to be less than 0.03 mm (for example, 0.01 mm) or greater than 0.12 mm (for example, 0.2 mm), or the like, and may be adjusted according to actual load conditions in use.

In some embodiments of the present disclosure, a plurality of first corrugated segments 1221a of the first bump foil 122a and one second corrugated segment 1221b of the second bump foil 122b are stacked. Therefore, the support effect on the top foil 123 under different loads can be further enhanced to effectively improve the stability and the bearing capacity of the air bearing 12.

Among the plurality of first corrugated segments 1221a and one second corrugated segment 1221b that correspond to each other, a gap is formed between the peak of the second corrugated segment 1221b and at least one of the plurality of first corrugated segments 1221a. For example, the gap may be formed between each of the plurality of first corrugated segments 1221a and the peak of the second corrugated segment 1221b. The gap may also be formed between one of the plurality of first corrugated segments 1221a and the peak of the second corrugated segment 1221b. In this way, the support effect on the top foil 123 can be adjusted depending on the applied load, further optimizing the bearing capacity of the air bearing 12.

In addition, each of the first corrugated segments 1221a and the one second corrugated segment 1221b may be configured to protrude towards the top foil 123, facilitating stacking of the plurality of first corrugated segments 1221a and one second corrugated segment 1221b.

Similarly, one first corrugated segment 1221a of the first bump foil 122a and the plurality of second corrugated segments 1221b of the second bump foil 122b are stacked. In addition, each of the one first corrugated segment 1221a and the plurality of second corrugated segments 1221b may be configured to protrude towards a bearing base, facilitating stacking of the plurality of second corrugated segments 1221b and one first corrugated segment 1221a.

Of course, different from the above solution, the plurality of first corrugated segments 1221a of the first bump foil 122a and the plurality of second corrugated segments 1221b of the second bump foil 122b are also stacked. Therefore, under different loads of the air bearing 12, both the first bump foil 122a and the second bump foil 122b can provide relatively stable support for the top foil 123, which improves the stability of the air bearing 12, and effectively maintains the air film between the top foil 123 and the rotary shaft.

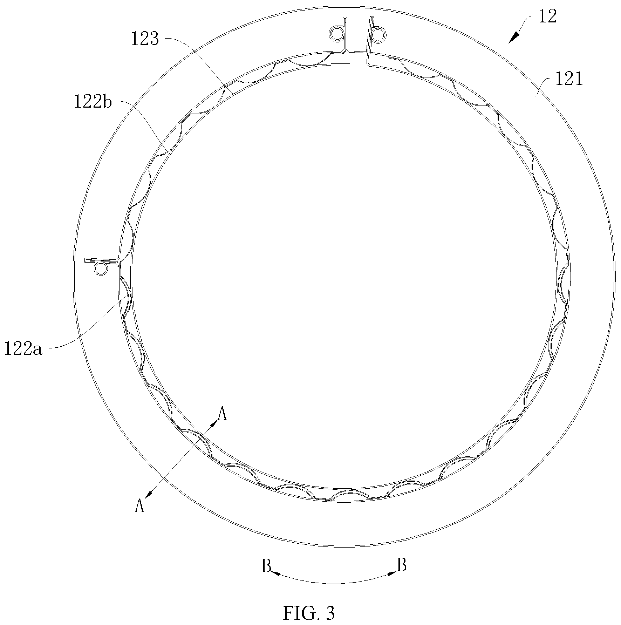

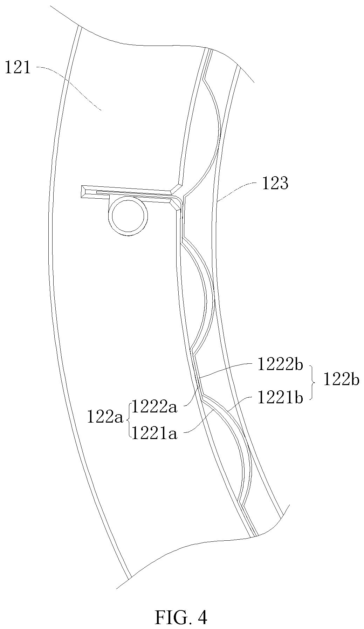

Alternatively, as illustrated in FIG. 3 and FIG. 4, the first bump foil 122a and a part of the second bump foil 122b are stacked. That is, a projection of the first bump foil 122a towards the second bump foil 122b in the stacking direction covers a part of the second bump foil 122b, and the first bump foil 122a has a size in the circumferential direction of the air bearing 12 smaller than a size of the second bump foil 122b in the circumferential direction of the air bearing 12. In other words, the first bump foil 122a is engaged with the second bump foil 122b to form a local double-layer structure, which can effectively ensure a support capacity provided by parts of the first bump foil 122a and parts of the second bump foil 122b for the top foil 123. Therefore, when the local load is large during the rotation of the rotary shaft, stability of the rotation of the rotary shaft can be improved, which can enhance a support effect of the rotary shaft, improving the bearing capacity of the air bearing 12. Further, in the present disclosure, one first bump foil 122a may be provided to achieve an effect of local enhancement for the second bump foil 122b. Also, a plurality of first bump foils 122a may be provided to achieve enhancement for different parts of the second bump foil 122b.

Similarly, the second bump foil and a part of the first bump foil 122a may also stacked. That is, a projection of the second bump foil 122b towards the first bump foil 122a in the stacking direction covers a part of the first bump foil 122a. The size of the second bump foil 122b in the circumferential direction of the air bearing 12 is smaller than the size of the first bump foil 122a in the circumferential direction of the air bearing 12.

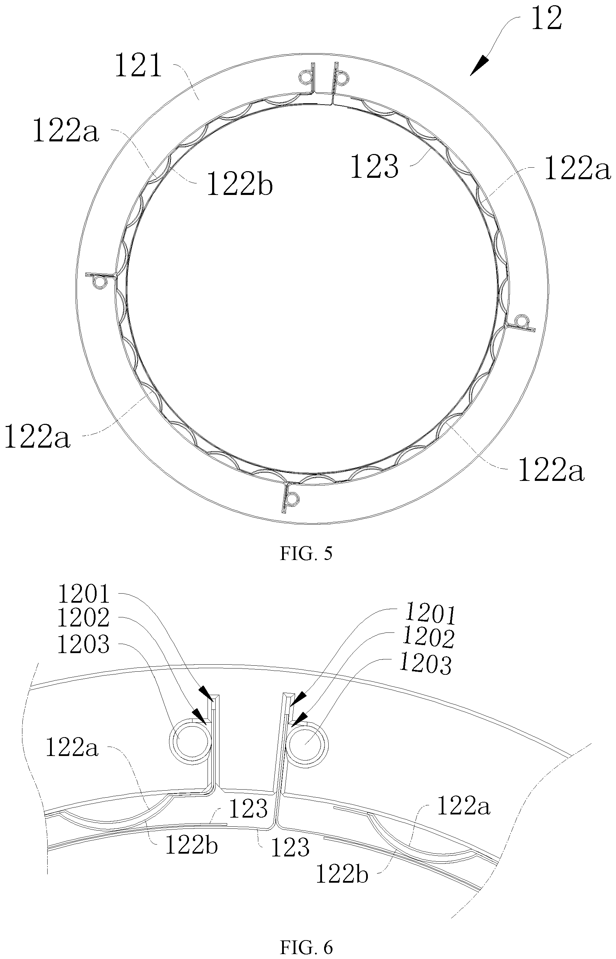

In addition, as illustrated in FIG. 5 and FIG. 6, in some embodiments of the present disclosure, the air bearing 12 includes a plurality of first bump foils 122a arranged in the circumferential direction of the air bearing 12. The plurality of first bump foils 122a may be arranged separately to optimize performance of the air bearing 12.

The plurality of first bump foils 122a and one second bump foil 122b are stacked, or the plurality of first bump foils 122a and different parts of the one second bump foil 122b in the circumferential direction of the air bearing 12 are stacked, respectively. In this way, the support effect on the top foil 123 by the engagement between the first bump foil 122a and the second bump foil 122b can be further improved, maintaining the stability of the air film between the top foil 123 and the rotary shaft, and improving the bearing capacity of the air bearing 12.

As illustrated in FIG. 5, each of the plurality of first bump foils 122a is fixedly connected to the mounting base 121 and extend in a same direction along the circumferential direction of the air bearing 12. Specifically, the plurality of first bump foils 122a extend in the same direction (clockwise or counterclockwise) along the second direction. Therefore, control over deformation directions of the plurality of first bump foils 122a is facilitated, which improves the stability of the air bearing 12 during operation.

Of course, at least two of the plurality of first bump foils 122a may be configured to extend in opposite directions. The at least two of the plurality of first bump foils 122a extend in opposite directions (clockwise and counterclockwise) along the second direction.

In some embodiments of the present disclosure, a ratio of a size of the first bump foil 122a in the circumferential direction of the air bearing 12 to a size of the second bump foil 122b in the circumferential direction of the air bearing 12 ranges from 10% to 90%. For example, the ratio may be set to 12%, 25%, 50%, 75%, etc. Therefore, the first bump foil 122a and the second bump foil 122b can be used together to provide greater local support for the top foil 123. The ratio of the size of the first bump foil 122a to the size of the second bump foil 122b in the second direction refers to a ratio of a size of a single first bump foil 122a to a size of a single second bump foil 122b in the second direction. Of course, the above ratio may be set to be less than 10% or greater than 90%.

In some embodiments of the present disclosure, a ratio of the size of the second bump foil 122b in the circumferential direction of the air bearing 12 to a size of the top foil 123 in the circumferential direction of the air bearing 12 ranges from 80% to 95%. For example, the ratio may be set to 82%, 90%, 94%, etc. Therefore, the top foil 123 can provide stable support for the rotary shaft. In addition, partial overlapping of the top foil 123 due to the deformation of the top foil 123 or the like is avoided, ensuring the stable rotation of the rotary shaft, and further improving the bearing capacity of the air bearing 12.

In some other embodiments of the present disclosure, the air bearing 12 includes a plurality of second bump foils 122b arranged in the circumferential direction of the air bearing 12. The plurality of second bump foils 122b may be arranged separately to optimize the performance of the air bearing 12.

The plurality of second bump foils 122b and one first bump foil 122a are stacked, or the plurality of second bump foils 122b and different parts of the one first bump foil 122a in the circumferential direction of the air bearing 12 are stacked, respectively. In this way, the support effect on the top foil 123 by the engagement between the first bump foil 122a and the second bump foil 122b can be further improved, maintaining the stability of the air film between the top foil 123 and the rotary shaft, and improving the bearing capacity of the air bearing 12.

In addition, the air bearing 12 may also include the plurality of first bump foils 122a arranged in the circumferential direction and the plurality of second bump foils 122b arranged in the circumferential direction. The plurality of first bump foils 122a and the plurality of second bump foils 122b are stacked. For example, the plurality of first bump foils 122a and the plurality of second bump foils 122b may be in a one-to-one correspondence. The plurality of first bump foils 122a and the plurality of second bump foils 122b are alternately arranged in the circumferential direction of the air bearing 12. At least two first bump foils 122a and one second bump foil 122b are stacked, while at least one first bump foil 122a and another second bump foil 122b are stacked. At least two second bump foils 122b and one first bump foil 122a are stacked, while at least one second bump foil 122b and one first bump foil 122a are stacked, etc. Of course, other arrangements may also be adopted in the present disclosure. The above description provides only some specific embodiments of the present disclosure, and is not intended to limit the scope of protection of the present disclosure.

In some embodiments of the present disclosure, the first bump foil 122a further includes the first connection segment 1222a alternately connected to the first corrugated segment 1221a in the circumferential direction of the air bearing 12 to facilitate stacking of the first bump foil 122a with other structures (e.g., the second bump foil 122b). Therefore, the stability of the first bump foil 122a is improved, which facilitates a stable deformation of the first bump foil 122a, ensuring the bearing capacity of the air bearing 12.

In addition, the second bump foil 122b further includes the second connection segment 1222b alternately connected to the second corrugated segment 1221b in the circumferential direction of the air bearing 12.

When the first bump foil 122a includes the first connection segment 1222a and the second bump foil 122b includes the second connection segment 1222b, the second connection segment 1222b and the first connection segment 1222a are stacked. When the top foil 123 has a displacement towards the mounting base 121 during the use of the air bearing 12, the first bump foil 122a and the second bump foil 122b can provide support for the top foil 123 together. The first bump foil 122a and the second bump foil 122b can simultaneously provide support forces for the top foil 123 to maintain dynamic balance of the top foil 123. Therefore, the bearing capacity of the air bearing 12 is improved, which improves the stability of the air bearing 12 during operation.

Further, when each of the first corrugated segment 1221a and the second corrugated segment 1221b protrudes towards the top foil 123, a size of the first connection segment 1222a along the circumferential direction of the air bearing 12 is larger than a size of the second connection segment 1222b, corresponding to the first connection segment 1222a, along the circumferential direction of the air bearing 12. In this case, the second connection segment 1222b and the first connection segment 1222a are stacked. By limiting a size relation of the first connection segment 1222a and the second connection segment 1222b, relative deformations of the first bump foil 122a and the second bump foil 122b can be facilitated to ensure that deformations of the first bump foil 122a and the second bump foil 122b does not interfere with each other. Therefore, the top foil 123 can be stably deformed and a stable gas film can be formed between the top foil 123 and the rotary shaft.

Similarly, when each of the first corrugated segment 1221a and the second corrugated segment 1221b protrudes towards the bearing base of the top foil 123, the size of the first connection segment 1222a along the circumferential direction of the air bearing 12 is smaller than the size of the second connection segment 1222b, corresponding to the first connection segment 1222a, along the circumferential direction of the air bearing 12.

As illustrated in FIG. 2, in some embodiments of the present disclosure, the gap is formed between the first corrugated segment 1221a and the second corrugated segment 1221b stacked on each other in the circumferential direction of the air bearing 12. In this way, mutual interference between the first bump foil 122a and the second bump foil 122b can be avoided when the first bump foil 122a and the second bump foil 122b are deformed, which enables forces exerted by the first bump foil 122a and the second bump foil 122b on the top foil 123 to be relatively stable. Therefore, the stable support for the top foil 123 can be achieved to avoid problems such as a gas leakage caused by an excessive local support force on the top foil 123, improving operation stability of the air bearing 12.

Of course, in the present disclosure, the first corrugated segment 1221a and the second corrugated segment 1221b that are stacked on each other may be in contact with each other in the circumferential direction of the air bearing 12. In this way, deformation resistances of the first bump foil 122a and the second bump foil 122b can be increased using contact between side parts of the first corrugated segment 1221a and the second corrugated segment 1221b. Therefore, the support effect on the top foil 123 can be improved to avoid problems such as an unstable gas film or the gas leakage caused by the excessive gap between the top foil 123 and the rotary shaft.

In some embodiments of the present disclosure, the gap is formed between each first corrugated segment 1221a and the peak of the second corrugated segment 1221b corresponding to the first corrugated segment 1221a. In this way, the first bump foil 122a and the second bump foil 122b can provide uniform support forces for the top foil 123, which can improve uniformity of deformations at different parts of the top foil 123, improving the stability of the gas film formed between the top foil 123 and the rotary shaft. Of course, gaps formed by different corrugated segments in the first bump foil 122a and peaks of corrugated segments, corresponding to the different corrugated segments in the first bump foil 122a, in the second bump foil 122b may be the same or different.

In some embodiments of the present disclosure, gaps are formed between part of the first corrugated segments 1221a and peaks of the second corrugated segments 1221b corresponding to the part of the first corrugated segments 1221a, and another part of the first corrugated segments 1221a are in contact with peaks of the second corrugated segments 1221b corresponding to the other part of the first corrugated segments 1221a. In this way, a problem that a large local load in the circumferential direction during the operation of the air bearing 12 can be comprehensively considered. For some opposite parts of the first bump foil 122a and the second bump foil 122b, a satisfactory support effect is provided when a rotational speed of the rotary shaft is small. For other opposite parts, the second bump foil 122b is used to support the top foil 123 separately, and the first bump foil 122a and the second bump foil 122b are used to support the top foil 123 together when the load increases, which can meet different operation conditions of the air bearing 12, improving the stability of the air bearing 12.

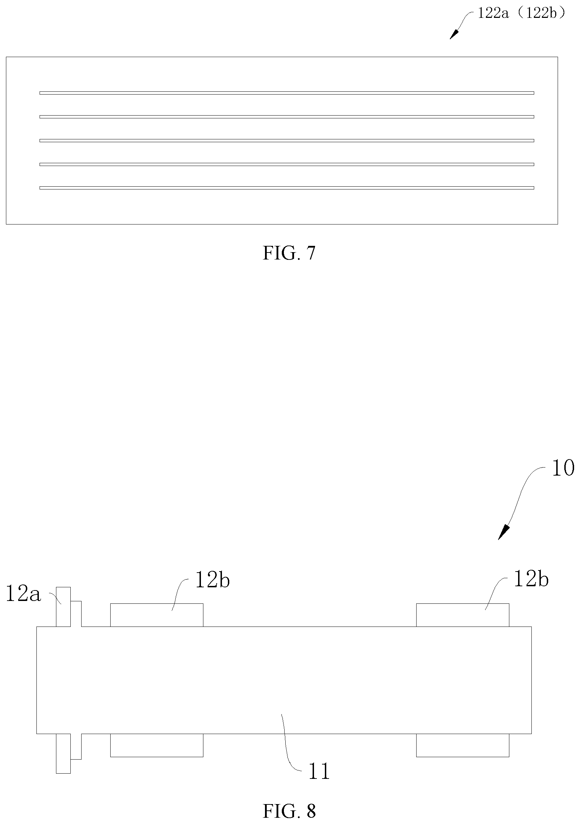

As illustrated in FIG. 7, in some embodiments of the present disclosure, the first bump foil 122a includes a plurality of segments arranged at intervals in a transverse direction (i.e., the above third direction). The transverse direction is perpendicular to a direction from the mounting base 121 to the top foil 123 and the circumferential direction of the air bearing 12. In this way, separate adjustments of the plurality of segments of the bump foil in the transverse direction can be facilitated to adapt to different operation conditions and different types of rotary shafts, improving the stability of the air bearing 12.

Further, in two adjacent segments of the first bump foil 122a in the transverse direction, the first corrugated segments 1221a, corresponding to the two adjacent segments of the first bump foil 122a in the transverse direction, in the transverse direction may be configured to have different heights. Therefore, the plurality of segments of the bump foil in the transverse direction can be set to different heights to realize that the air bearing 12 has different bearing capacities in the transverse direction, which improves the stability of the air bearing 12 and the stability of the air film between the rotary shaft and the air bearing 12. Alternatively, in adjacent segments of the first bump foil 122a in the transverse direction, the first corrugated segments 1221a in different segments are arranged alternately in the circumferential direction of the air bearing 12. Therefore, uniformity of support to the top foil 123 can be further improved. In addition, alternatively, in two adjacent segments of the first bump foil 122a in the transverse direction, the first corrugated segments 1221a in different segments have different thicknesses. Alternatively, the plurality of segments of the first bump foil 122a in the transverse direction are connected at an end of each of the plurality of segments of the first bump foil 122a in the transverse direction. In this way, the first bump foil 122a can be constructed as one piece to facilitate production and fabrication of the first bump foil 122a. In the present disclosure, the plurality of segments of the first bump foil 122a may be connected at an end of each of the plurality of segments of the first bump foil 122a in the circumferential direction, or the plurality of segments of the first bump foil 122a may be connected at two ends of each of the plurality of segments of the first bump foil 122a in the circumferential direction.

In addition, the second bump foil 122b may be configured to include a plurality of segments arranged at intervals in the transverse direction. In two adjacent segments of the second bump foil 122b in the transverse direction, the second corrugated segments 1221b, corresponding to the two adjacent segments of the second bump foil 122b in the transverse direction, in the transverse direction may be configured to have different heights. Therefore, the plurality of segments of the bump foil in the transverse direction can be set to have different heights to realize that the air bearing 12 has different bearing capacities in the transverse direction, which improves the stability of the air bearing 12 and the stability of the air film between the rotary shaft and the air bearing 12. Alternatively, in adjacent segments of the second bump foil 122b in the transverse direction, the second corrugated segments 1221b in different segments are arranged alternately in the circumferential direction of the air bearing 12. Therefore, the uniformity of the support to the top foil 123 can be further improved. In addition, alternatively, in two adjacent segments of the second bump foil 122b in the transverse direction, the second corrugated segments 1221b in different segments have different thicknesses. Alternatively, the plurality of segments of the second bump foil 122b in the transverse direction are connected at an end of each of the plurality of segments of the second bump foil 122b in the transverse direction. In this way, the second bump foil 122b can be constructed as one piece to facilitate production and fabrication of the second bump foil 122b. In the present disclosure, the plurality of segments of the second bump foil 122b may be connected at an end of each of the plurality of segments of the second bump foil 122b in the circumferential direction, or the plurality of segments of the second bump foil 122b may be connected at two ends of each of the plurality of segments of the second bump foil 122b in the circumferential direction.

In some embodiments of the present disclosure, at least two first corrugated segments 1221a of the first bump foil 122a have different thicknesses. The stability of the air bearing 12 can be maintained when different regions of the air bearing 12 have different loads. For example, the first corrugated segment 1221a having an increased thickness or a decreased thickness may be arranged alternately with a certain quantity of first corrugated segments 1221a; or the first corrugated segment 1221a having a greater thickness and the first corrugated segment 1221a having a smaller thickness are alternately arranged in the circumferential direction of the air bearing 12.

In some embodiments of the present disclosure, at least two second corrugated segments 1221b of the second bump foil 122b have different thicknesses. The stability of the air bearing 12 can be maintained when different regions of the air bearing 12 have different loads. For example, the second corrugated segment 1221b having an increased thickness or a decreased thickness may be arranged alternately with a certain quantity of second corrugated segments 1221b; or the second corrugated segment 1221b having a greater thickness and the second corrugated segment 1221b having a smaller thickness are alternately arranged in the circumferential direction of the air bearing 12.

In some embodiments of the present disclosure, the thickness of the first corrugated segment 1221a is different from the thickness of the second corrugated segment 1221b. Therefore, the first corrugated segment 1221a and the second corrugated segment 1221b can provide different support forces to further improve the stability the air bearing 12 and expand an application range of the air bearing 12.

For example, the first corrugated segment 1221a has the thickness greater than that of the second corrugated segment 1221b. In this way, when the top foil 123 moves a small displacement towards the mounting base 121, the second bump foil 122b can be quickly deformed to facilitate the deformation of the top foil 123. However, when the top foil 123 moves a large displacement towards the mounting base 121, the first bump foil 122a and the second bump foil 122b can provide a larger support force together, which therefore reduces a tendency of the top foil 123 to continue moving towards the mounting base 121. In this way, the air film between the top foil 123 and the rotary shaft is maintained, which realizes the stable rotation of the rotary shaft.

In addition, at least part of the first bump foil 122a may also have a different thickness from a part of the second bump foil 122b corresponding to the at least part of the first bump foil 122a. Therefore, when the first bump foil 122a and/or the second bump foil 122b provide support for the top foil 123, the stability of the support for the top foil 123 can be improved, which facilitates a formation of a stable air film between the top foil 123 and the rotary shaft.

In some embodiments of the present disclosure, each of the first corrugated segment 1221a of the first bump foil 122a and the second corrugated segment 1221b of the second bump foil 122b protrudes towards the mounting base 121. The first bump foil 122a is arranged between the second bump foil 122b and the mounting base 121. During use, when the top foil 123 is deformed, a force is first applied to the first bump foil 122a. Since the first bump foil 122a and the second bump foil 122b are stacked, the force applied by the top foil 123 to the second bump foil 122b is also transmitted to the first bump foil 122a, providing the support for the top foil 123.

In addition, each of the first corrugated segment 1221a of the first bump foil 122a and the second corrugated segment 1221b of the second bump foil 122b may protrude towards the top foil 123. The first bump foil 122a is arranged between the second bump foil 122b and the mounting base 121. During use, when the top foil 123 is deformed, a force is first applied to the second bump foil 122b. Since the first bump foil 122a and the second bump foil 122b are stacked, the force applied by the top foil 123 to the second bump foil 122b is also transmitted to the first bump foil 122a, providing the support for the top foil 123.

In the present disclosure, a single-layer top foil 123 or a multi-layer top foil 123 may be provided. The multi-layer top foil 123 may be in a stacked arrangement, as illustrated in the figure, to improve rigidity of the top foils 123 and reduce a difference in a deformation amount of the top foil 123. In the present disclosure, by increasing a quantity of bump foils, a friction area between the bump foils is multiplied, greatly improving friction damping and the stability of the air bearing 12.

In some embodiments of the present disclosure, the top foil 123 has a first portion and a second portion. The first portion and the second portion have different thicknesses. Different regions of the top foil 123 may have different support strengths, in such a manner that the top foil 123 is thickened for a region with a greater load in the air bearing 12. Therefore, the bearing capacity of the air bearing 12 is improved to achieve a balance across different regions of the air bearing 12, providing a relatively stable air film.

In some embodiments of the present disclosure, the bump foil further includes a third bump foil. One or more third bump foils may be provided. The third bump foil may be disposed between the first bump foil 122a and the second bump foil 122b. Or the third bump foil may be disposed between the first bump foil 122a and the mounting base 121. The third bump foil may also be disposed between the second bump foil 122b and the top foil 123. For example, the first bump foil 122a is disposed between the second bump foil 122b and the mounting base 121. The third bump foil is disposed between the first bump foil 122a and the second bump foil 122b; the third bump foil is disposed between the first bump foil 122a and the mounting base 121; and/or the third bump foil is disposed between the second bump foil 122b and the top foil 123.

As illustrated in FIG. 2 and FIG. 6, in some embodiments of the present disclosure, an end of each of the first bump foil 122a and the second bump foil 122b is fixedly connected to the mounting base 121. Each of the first bump foil 122a and the second bump foil 122b extends in the same direction along the circumferential direction of the air bearing 12. The other end of each of the first bump foil 122a and the second bump foil 122b is movably engaged with both the mounting base 121 and the top foil 123. Therefore, deformation directions of the plurality of bump foils can be well controlled to improve a support effect on and the stability of the top foil 123, improving the bearing capacity of the air bearing 12.

Alternatively, the mounting base 121 has positioning grooves 1201 at an inner side surface of the mounting base 121. The inner side surface of the mounting base 121 is a surface of the mounting base 121 opposite to the top foil 123. An end of the first bump foil 122a and an end of the second bump foil 122b are inserted and fixed in one positioning groove 1201 of the positioning grooves 1201. The bump foil can be stably mounted at the mounting base 121 through one positioning groove 1201, which can effectively improve the stability of the bump foil. A mounting efficiency of the plurality of bump foils can be improved by mounting the plurality of bump foils through the one positioning groove 1201.

Of course, in the present disclosure, the end of the first bump foil 122a and the end of the second bump foil 122b may be inserted into different positioning grooves 1201 of the positioning grooves 1201, respectively. In this way, mutual interference between the plurality of bump foils can be reduced to realize control over deformation manner of the bump foils, improving the stability and the bearing capacity of the air bearing 12.

A connection piece extending in the first direction towards the mounting base 121 may be arranged at each of an end of the first bump foil 122a and an end of the second bump foil 122b. The connection piece may be inserted into the positioning grooves 1201 to realize the mounting of the bump foil.

In addition, to further improve the mounting stability of the bump foil, in the present disclosure, a positioning pin 1203 is disposed to fix the bump foil. That is, the above connection piece may be positioned by the positioning pin 1203. As illustrated in FIG. 2 and FIG. 6, in some embodiments of the present disclosure, the mounting base 121 has the positioning grooves 1201 at an inner circumferential surface of the mounting base 121. Each of the positioning grooves 1201 has a positioning opening 1202 at an inner side wall of each of the positioning grooves 1201. The mounting base 121 is provided with the positioning pin 1203 embedded in the positioning opening 1202. The positioning pin 1203 is configured to position the bump foil. Therefore, a mounting efficiency and the stability of each of the top foil 123 and the bump foil can be improved.

In the present disclosure, the positioning grooves 1201 may also be set to position the top foil 123. Similarly, the connection piece extending towards the mounting base 121 in the first direction may be disposed at an end of the top foil 123. The connection piece may be inserted into the positioning grooves 1201 to realize the mounting of the top foil 123. Each of an end of the bump foil and the end of the top foil 123 is fixedly connected to the mounting base 121. The top foil 123 and the bump foil extend in opposite directions along the circumferential direction of the air bearing 12. In addition, the bump foil of the present disclosure may include a plurality of layers. As an example, a double-layer bump foil is provided. Movable ends of the double-layer bump foil may extend in one direction along the circumferential direction of the air bearing 12, or in opposite directions along the circumferential direction of the air bearing 12, respectively.

The air bearing 12 according to the embodiments of the present disclosure may be the axial air bearing 12a or the radial air bearing 12b.

Taking the axial air bearing 12a as an example, the mounting base 121, the bump foil, and the top foil 123 are stacked in the axial direction.

In addition, taking the radial air bearing 12b as an example, the mounting base 121, the bump foil, and the top foil 123 are sleeved on each other from outside to inside in the radial direction. During the use of the radial air bearing 12b, the top foil 123 is sleeved on the rotary shaft. During the rotation of the rotary shaft, the top foil 123 is forced to displace towards the mounting base 121, and thus the air film is formed between the rotary shaft and the top foil 123. With the support effect of the bump foil, the dynamic balance of the air film between the rotary shaft and the top foil 123 can be realized, improving the stability of the rotary shaft during the rotation.

The present disclosure further provides a rotor assembly 10. The rotor assembly 10 according to the embodiments of the present disclosure includes a rotor 11 and the air bearing 12 according to the above embodiments. With the above air bearing 12, the stability of the rotor assembly 10 during operation can be improved, and damping of the rotor 11 during a rotation of the rotor 11 can be reduced.

The rotor assembly 10 may include the radial air bearing 12b sleeved on an outer periphery of the rotor 11. The radial air bearing 12b is the air bearing 12 according to the above embodiments. The mounting base 121, the bump foil, and the top foil 123 of the radial air bearing 12b are sequentially stacked on each other from outside to inside in a radial direction of the rotor 11. During use, the top foil 123 is pushed to move towards the bearing base and the air film is formed at a surface of the top foil 123 during the rotation of the rotor assembly 10. Further, the top foil 123 is pushed to expand outwards and abuts against the bump foil. In addition, the bump foil provides support for the top foil 123 to facilitate a formation of an appropriate distance between the bump foil and the rotary shaft, which maintains the stability of the air film between the top foil 123 and the rotary shaft. Furthermore, the stable rotation of the rotor 11 can simultaneously be maintained to reduce a radial movement of the rotor 11.

In addition, the rotor assembly 10 may further include the axial air bearing 12a engaged with the rotor 11. The axial air bearing 12a is the air bearing 12 according to the above embodiments. The mounting base 121, the bump foil, and the top foil 123 of the axial air bearing 12a are sequentially stacked on each other in an axial direction of the rotor 11. During use, the top foil 123 is pushed to move towards the bearing base and the air film is formed at the surface of the top foil 123 during the rotation of the rotor assembly 10. The top foil 123 abuts against the bump foil. In addition, the bump foil provides the support for the top foil 123 to facilitate the formation of the appropriate distance between the bump foil and the rotary shaft, which maintains the stability of the air film between the top foil 123 and the rotary shaft.

The present disclosure further provides a compressor including the above air bearing 12.

The present disclosure further provides a compressor including the above rotor assembly 10.

The present disclosure further provides a heating and ventilation device including the above air bearing 12.

The present disclosure further provides a heating and ventilation device including the above rotor assembly 10.

The present disclosure further provides a heating and ventilation device including the above compressor.

The present disclosure provides the air bearing 12, and the rotor assembly 10, the compressor, and the heating and ventilation device comprising the air bearing 12. The gap is formed between the first corrugated segment 1221a of the first bump foil 122a and the peak of the second corrugated segment 1221b of the second bump foil 122b of the air bearing 12. In case of small load, only one of the first bump foil 122a and the second bump foil 122b provides support. In this case, the bump foil supported by the single layer of bump foil is easy to deform and has high structural damping, which can well absorb energy brought by a vibration of the rotor 11, ensuring the stability of the rotor 11. In case of heavy load or impact, when the second corrugated segment 1221b and the first corrugated segment 1221a are squeezed to have a same wave height, the support is provided by the first corrugated segment 1221a and the second corrugated segment 1221b together. In this case, large support rigidity can be realized, which ensures that the bump foil is free from being crushed and irreversibly deformed. Also, a critical rotational speed of the rotor 11 can be increased, which ensures the stability and an impact resistance of the rotor 11 at a high rotational speed.

To reduce a gas leakage of the air bearing 12 and realize a reasonable distribution of the support rigidity of the air bearing 12 in the axial direction, the first bump foil 122a or the second bump foil 122b in the present disclosure is designed to include segments arranged in the third direction. As illustrated in FIG. 7, the foil is divided into several segments in the third direction, in which two segments at two ends of the foil are wide, while several segments in a middle of the foil are short and evenly distributed. This structure realizes that segments of the bump foil in a middle of the bump foil have small rigidity, and segments of the bump foil at two ends of the bump foil have large rigidity, which realizes variable axial rigidity. During the operation of the air bearing 12, a deformation amount of parts of the foil at the two ends of the foil is smaller than parts of the foil in the middle of the foil, which can reduce the gas leakage from two ends of the foil. Therefore, a pressure of the gas film in the middle of the foil is increased, improving an overall bearing capacity of the radial foil aerodynamic pressure bearing.

In the present disclosure, two ends of the top foil 123 have integral structures and are not divided into segments, which can also ensure integrity of the bump foil.

In the present disclosure, the multi-layer (for example, a double-layer) top foil 123 can be adopted to improve the rigidity of the top foil 123 and reduce a difference in deformation amounts of the top foil 123 in the radial direction (the top foil 123 in the related art has a large deformation amount between two corrugated heights and is easy to recess outwards). A scheme of a single-layer top foil 123 in the related art leads to a larger gap between the top foil 123 and the rotor 11 between two wave heights, which affects a wedge-shaped compression effect, resulting in a small local pressure and a low overall bearing capacity. The multi-layer top foil 123 in the present disclosure effectively solves this problem. The overall bearing capacity of the foil is improved by reducing a difference in the deformation amounts of the top foil 123 at a peak and a trough.

In the present disclosure, by increasing the quantity of bump foils, the friction area between the bump foils is multiplied, greatly improving the friction damping and the stability of the air bearing 12.

The present disclosure provides the air bearing 12, which has an integral circumferential structure and variable axial rigidity, and includes double bump foils with non-equal heights, double top foils 123, etc. The air bearing 12 includes the mounting base 121, the first bump foil 122a, the second bump foil 122b, the multi-layer top foil 123, the positioning pin 1203, and the like. As illustrated in FIG.1, the mounting base 121 is a finished bearing sleeve having two positioning grooves 1201 and two positioning openings 1202, for fixing the bump foil and the top foil 123.

The bump foil in the present disclosure may be made of beryllium bronze, nickel-based alloy, high-strength stainless steel, etc. The strip-shaped foil is axially segmented by wire cutting or laser cutting. During the wire cutting, a middle part of the foil is divided into several segments. Two ends of the foil are wide, while several segments of the foil in the middle of the foil are relatively narrow. In addition, a part of each of two ends of the foil is left uncut to ensure integrity of the foil and facilitate mounting after subsequent molding. The wire cut foil is pressed into the bump foil. One of the first bump foil 122a and the second bump foil 122b may have an arched wave structure, while the other of the first bump foil 122a and the second bump foil 122b may have a wavy structure. The air bearing 12 of the present disclosure may be the axial air bearing 12a or the radial air bearing 12b. For the radial air bearing 12b, two strip-shaped bump foils may be rolled into circular rings, respectively. The top foil 123 may be made of beryllium bronze, nickel-based alloy, high-strength stainless steel, or the like. An inner wall of the top foil 123 is sprayed with a wear-resistant self-lubricating material, which may be molybdenum disulfide, polytetrafluoroethylene, PM304, PS304, etc.

An end of the bump foil is fixed at the mounting base 121 through the positioning groove 1201 and the positioning pin 1203. An end of the top foil 123 is fixed at the mounting base 121 through an engagement between the positioning groove 1201 and the positioning pin 1203. A plurality of bump foils may be fixed with the mounting base 121 and extend in one direction along the circumferential direction of the air bearing 12. Two top foils 123 may be stacked on each other. One of the two top foils 123 and the plurality of bump foils are stacked, and has an end fixedly connected to the mounting base 121 and another end extending in a direction opposite to an extending direction of the bump foil. The other one of the two top foils 123 has an end fixedly connected to the mounting base 121 and another end extending in a same direction as the extending direction of the bump foil. This fixation method can ensure an attachment degree of the bump foil to an inner wall of the mounting base 121, to prevent performance and a service life of the bearing from being affected due to poor attachment of the foil.

In addition, the terms "first" and "second" are only used for descriptive purposes, and cannot be understood as indicating or implying relative importance or implicitly indicating the number of indicated technical features. Therefore, the features associated with "first" and "second" may explicitly or implicitly include at least one of the features. In the description of the present disclosure, "plurality" means at least two, unless otherwise specifically defined.

In the present disclosure, unless otherwise clearly specified and limited, terms such as "mount", "connect", "connect to", "fix", and the like should be understood in a broad sense. For example, it may be a fixed connection or a detachable connection or connection as one piece; mechanical connection or electrical connection; direct connection or indirect connection through an intermediate; internal communication of two components or the interaction relationship between two components, unless otherwise clearly limited. For those of ordinary skill in the art, the specific meaning of the above-mentioned terms in the present disclosure can be understood according to specific circumstances.

In the present disclosure, unless otherwise clearly specified and limited, a first feature "on" or "under" a second feature means that the first feature is in direct contact with the second feature, or the first feature is in indirect contact with the second feature through an intermediate medium. Moreover, the first feature "above" the second feature means that the first feature is directly above or obliquely above the second feature, or simply means that the level of the first feature is higher than that of the second feature. The first feature "below" the second feature means that the first feature is directly below or obliquely below the second feature, or simply means that the level of the first feature is smaller than that of the second feature.

Reference throughout this specification to "an embodiment", "some embodiments", "an example", "a specific example", or "some examples" means that a particular feature, structure, material, or characteristic described in connection with the embodiment or example is included in at least one embodiment or example of the present disclosure. The appearances of the above phrases in various places throughout this specification are not necessarily referring to the same embodiment or example. Further, the particular features, structures, materials, or characteristics may be combined in any suitable manner in one or more embodiments or examples. In addition, different embodiments or examples and features of different embodiments or examples described in the specification may be combined by those skilled in the art without mutual contradiction.

Although embodiments of the present disclosure have been illustrated and described above, it should be understood that the above embodiments are merely exemplary, and cannot be construed to limit the present disclosure. For those skilled in the art, changes, alternatives, and modifications may be made to the embodiments without departing from the scope of the present disclosure.

## Claims

1. An air bearing, comprising a mounting base, a bump foil, and a top foil that are stacked in sequence, the bump foil comprising a first bump foil and a second bump foil, wherein:
the first bump foil comprises a first corrugated segment;
the second bump foil comprises a second corrugated segment, the second corrugated segment and the first corrugated segment being stacked;
a gap is formed between a peak of the second corrugated segment and the first corrugated segment in a stacking direction; and
the second corrugated segment is closer to the top foil than the first corrugated segment in the stacking direction.

2. The air bearing according to claim 1, wherein:
at least two first corrugated segments of the first bump foil have different protrusion heights; and/or
at least two second corrugated segments of the second bump foil have different protrusion heights.

3. The air bearing according to claim 2, wherein:
the at least two first corrugated segments are arranged alternately in a circumferential direction of the air bearing; and/or
the at least two second corrugated segments are arranged alternately in the circumferential direction of the air bearing.

4. The air bearing according to claim 1, wherein the gap formed between the peak of the second corrugated segment and the first corrugated segment in the stacking direction has a size greater than or equal to 0.03 mm and less than or equal to 0.12 mm.

5. The air bearing according to claim 1, wherein:
a plurality of first corrugated segments of the first bump foil and one second corrugated segment of the second bump foil are stacked; or
one first corrugated segment of the first bump foil and a plurality of second corrugated segments of the second bump foil are stacked; or
a plurality of first corrugated segments of the first bump foil and a plurality of second corrugated segments of the second bump foil are stacked.

6. The air bearing according to claim 1, wherein:
the first bump foil and a part of the second bump foil are stacked; or
the second bump foil and a part of the first bump foil are stacked; or
the air bearing comprises a plurality of first bump foils arranged in a circumferential direction of the air bearing; or
the air bearing comprises a plurality of second bump foils arranged in a circumferential direction of the air bearing.

7. The air bearing according to claim 1, wherein:
the first bump foil further comprises a first connection segment alternately connected to the first corrugated segment in a circumferential direction of the air bearing; and/or
the second bump foil further comprises a second connection segment alternately connected to the second corrugated segment in the circumferential direction of the air bearing.

8. The air bearing according to claim 1, wherein the first corrugated segment and the second corrugated segment stacked on each other form a gap or are in contact with each other in a circumferential direction of the air bearing.

9. The air bearing according to claim 1, wherein:
the first bump foil comprises a plurality of segments arranged at intervals in a transverse direction; or
the second bump foil comprises a plurality of segments arranged at intervals in a transverse direction,
wherein the transverse direction is perpendicular to the stacking direction and a circumferential direction of the air bearing.

10. The air bearing according to any one of claims 1 to 5, wherein:
at least two first corrugated segments of the first bump foil have different thicknesses; and/or
at least two second corrugated segments of the second bump foil have different thicknesses; and/or
the thickness of the first corrugated segment is different from the thickness of the second corrugated segment.

11. The air bearing according to claim 1, wherein:
the first corrugated segment of the first bump foil and the second corrugated segment of the second bump foil protrude towards the mounting base; or
the first corrugated segment of the first bump foil and the second corrugated segment of the second bump foil protrude towards the top foil.

12. The air bearing according to claim 1, wherein the top foil comprises a plurality of layers stacked on each other.

13. The air bearing according to claim 1, wherein the top foil has a first portion and a second portion, the first portion and the second portion having different thicknesses.

14. The air bearing according to claim 1, wherein the bump foil further comprises at least one third bump foil, wherein:
the at least one third bump foil is disposed between the first bump foil and the second bump foil; or
the at least one third bump foil is disposed between the first bump foil and the mounting base; or
the at least one third bump foil is disposed between the second bump foil and the top foil.

15. The air bearing according to claim 1, wherein:
the mounting base has positioning grooves;
an end of the first bump foil and an end of the second bump foil are inserted and fixed in one positioning groove of the positioning grooves; or
an end of the first bump foil and an end of the second bump foil are respectively inserted and fixed in different positioning grooves of the positioning grooves.

16. The air bearing according to claim 15, wherein:
the positioning groove has a positioning opening at an inner side wall of the positioning groove; and
the mounting base is provided with a positioning pin embedded in the positioning opening and positioning the bump foil.

17. The air bearing according to any one of claims 1 to 16, wherein the air bearing is a radial air bearing or an axial air bearing.

18. A rotor assembly, comprising a rotor, the rotor assembly further comprising:
a radial air bearing sleeved on an outer periphery of the rotor, the radial air bearing being an air bearing according to any one of claims 1 to 16, wherein a mounting base, a bump foil, and a top foil of the radial air bearing are sequentially stacked on each other from outside to inside in a radial direction of the rotor; and/or
an axial air bearing engaged with the rotor, the axial air bearing being the air bearing according to any one of claims 1 to 16, wherein the mounting base, the bump foil, and the top foil of the axial air bearing are sequentially stacked on each other in an axial direction of the rotor.

19. A compressor, comprising:
an air bearing according to any one of claims 1 to 17; or
a rotor assembly according to claim 18.

20. A heating and ventilation device, comprising:
an air bearing according to any one of claims 1 to 17, or;
a rotor assembly according to claim 18; or
a compressor according to claim 19.
